Europäisches Patentamt

(19) European Patent Office

Office européen des brevets

(11) Veröffentlichungsnummer: **0 056 558**
**B1**

(12) **EUROPÄISCHE PATENTSCHRIFT**

(45) Veröffentlichungstag der Patentschrift:
**29.05.85**

(51) Int. Cl.⁴: **H 02 B 1/04,** H 01 R 9/09

(21) Anmeldenummer: **81730108.8**

(22) Anmeldetag: **15.10.81**

(54) **Stecksockel für Niederspannungs-Schutzschalter.**

(30) Priorität: **15.01.81 DE 3101532**

(43) Veröffentlichungstag der Anmeldung:
**28.07.82 Patentblatt 82/30**

(45) Bekanntmachung des Hinweises auf die Patenterteilung:
**29.05.85 Patentblatt 85/22**

(84) Benannte Vertragsstaaten:
**FR GB IT**

(56) Entgegenhaltungen:
**DE - B - 1 214 293**
**GB - A - 1 181 893**
**US - A - 3 463 967**
**US - A - 4 167 768**

(73) Patentinhaber: **Siemens Aktiengesellschaft, Berlin und München Wittelsbacherplatz 2, D-8000 München 2 (DE)**

(72) Erfinder: **Troebel, Werner, Ing. grad., Alt-Gatow 57/59, D-1000 Berlin 22 (DE)**

**Beschreibung**

Die Erfindung befaßt sich mit einem Stecksokkel für Niederspannungs-Schutzschalter in Kompaktbauform mit an gegenüberliegenden Stirnseiten angeordneten Anschlußvorrichtungen.

Ein Stecksockel dieser Art ist beispielsweise durch die GB-A-1 181 893 bekanntgeworden. Die Gehäuse der Schutzschalter sind dabei so ausgeführt, daß sich formschlüssig ein Klemmenblock ansetzen läßt, der die Verbindung der eigentlichen Schalterklemmen mit durchgehenden Sammelschienen herzustellen gestattet. An der gegenüberliegenden Stirnseite lassen sich dann abgehende Leitungen oder Kabel in üblicher Weise anschließen.

Bei einer anderen bekannten Ausführungsform (US-A-2 707 761) werden Schutzschalter mit rückseitig angeordneten federnden Kontaktvorrichtungen verwendet, die mit ortsfesten Messerkontakten zusammenwirken. Für jeden Schutzschalter ist dabei eine eigene Tragplatte vorgesehen, die mit den Kontaktmessern versehen ist. Eine Reihe solcher Tragplatten mit Messerkontakten läßt sich an einem Gestell zu einer Schalttafel zusammensetzen.

Ausgehend von der üblichen Bauform von Schutzschaltern mit stirnseitig angeordneten Anschlußvorrichtungen liegt der Erfindung die Aufgabe zugrunde, einen Stecksockel zu schaffen, der ein Auswechseln des Schutzschalters ohne das Lösen und erneutes Anschließen von Kabeln oder Leitungen ermöglicht.

Gemäß der Erfindung wird diese Aufgabe dadurch gelöst, daß eine Tragplatte mit zwei darauf an ihren Enden angeordneten gleichen Steckeinheiten vorgesehen ist, die parallel zur Strombahn des Schalters verlaufende brückenartige Kontaktlamellen zur Verbindung mit an dem Schutzschalter befindlichen äußeren Messerkontaktstücken aufweisen. Die Steckeinheiten bilden dabei einheitliche Bauteile, die bei gleichem Abstand benachbarter Sätze von Kontaktlamellen für Schalter unterschiedlicher Länge verwendbar sind. Das Zusammenwirken üblicher Schutzschalter mit den Kontaktlamellen erfordert lediglich einfache Leiterstücke, die mit ihrem einen Ende in die üblichen Kabel- oder Leitungsklemmen eingesetzt oder anstelle derselben benutzt werden und die an ihrem äußeren Ende nach der Art eines Messerkontaktes ausgeführt sind. Diese Anordnung ist insbesondere von Vorteil in Verbindung mit Kontaktlamellen entsprechend der DE-C-1 665 986 mit wenigstens zwei in Einschubrichtung hintereinander liegenden Lamellenpaaren. Man erzielt hierdurch bei großer Stromtragfähigkeit verhältnismäßig geringe Kräfte zum Einsetzen und Herausnehmen des Schutzschalters.

Der einfache Aufbau des Stecksockels aus einer Tragplatte und zwei gleichen Steckeinheiten ermöglicht es darüber hinaus, Sicherheitsvorrichtungen gegen ein unerwünschtes Aufsetzen eines Schutzschalters auf den Stecksockel und gegen das Abnehmen eines Schutzschalters unter Last zu schaffen. Eine Sperre gegen das Aufsetzen eines Schutzschalters kann im Rahmen der Erfindung dadurch erreicht werden, daß die Tragplatte in ihrem zwischen den Steckeinheiten liegenden Teil eine Durchbrechung mit einem am Rand verbleibenden frei zugänglichen Steg für den Schloßbügel wenigstens eines Vorhängeschlosses besitzt. Durch die Anordnung des Steges ist ohne weiteres zu erreichen, daß bei Anwendung eines Vorhängeschlosses mit üblicher Dicke seines Schloßbügels die an dem Schutzschalter befindlichen Kontaktmesser nicht gleichzeitig mit beiden Steckeinheiten des Stecksockels in Eingriff gelangen können. Auf diese Weise läßt sich bei Bauarbeiten, Reparaturen und ähnlichen Arbeiten die erforderliche Spannungsfreiheit sicherstellen.

Ferner kann die Tragplatte in ihrem zwischen den Steckeinheiten liegenden Teil einen seitlichen Fortsatz als Gegenfläche für einen am Unterteil des Schutzschalters angeordneten Sicherheitsauslösestift besitzen. Durch einen solchen in dem Schutzschalter angeordneten Auslösestift wird zwangsläufig eine Auslösung des Schalters herbeigeführt, bevor der Schalter von den Steckeinheiten getrennt wird und an diesen Stellen Lichtbögen entstehen können. Die Unterbrechung des Stromkreises erfolgt somit stets in ordnungsgemäßer Weise durch den Schutzschalter.

Es empfiehlt sich, die Tragplatte an den Längsseiten mit Ausnahme des Steges und des Fortsatzes hutschienenartig profiliert auszuführen. Hierdurch erhält die Tragplatte eine ausreichende Steifigkeit und zugleich wird gegenüber einer Montagefläche ein Abstand geschaffen, der die vorgesehene Anwendung von Vorhängeschlössern gestattet.

Sicherheit gegen eine Berührung der Kontaktlamellen kann durch an den Steckeinheiten schalterseitig vorgesehene Stege erreicht werden, die eine Mündung für die Messerkontaktstücke des Schutzschalters begrenzen, der gegenüber die Kontaktlamellen mit einem Sicherheitsabstand zurückgesetzt sind. Ferner kann das Gehäuse der Steckeinheiten im Bereich der Stege in Richtung auf den einzusteckenden Schutzschalter verlängert sein, wobei das Gehäuse des Schutzschalters eine Ausnehmung zur Aufnahme des Vorsprungs besitzt. Es ergibt sich dadurch ein verlängerter Kriechweg und eine Verringerung der Bauhöhe der Steckeinheiten.

Der Anschluß der äußeren Kabel oder Leitungen an die Steckeinheiten des Stecksockels ist in unterschiedlicher Weise durchführbar. Im Rahmen der Erfindung können äußere Anschlußstücke verwendet werden, die in dem Gehäuse der Steckeinheiten durch Herumgreifen um die Kontaktlamellen formschlüssig gehalten und auswechselbar sind. Die gleichen Steckeinheiten sind damit für den Anschluß in unterschiedlichen Richtungen geeignet.

Die Erfindung wird im folgenden anhand des in den Figuren dargestellten Ausführungsbeispiels näher erläutert.

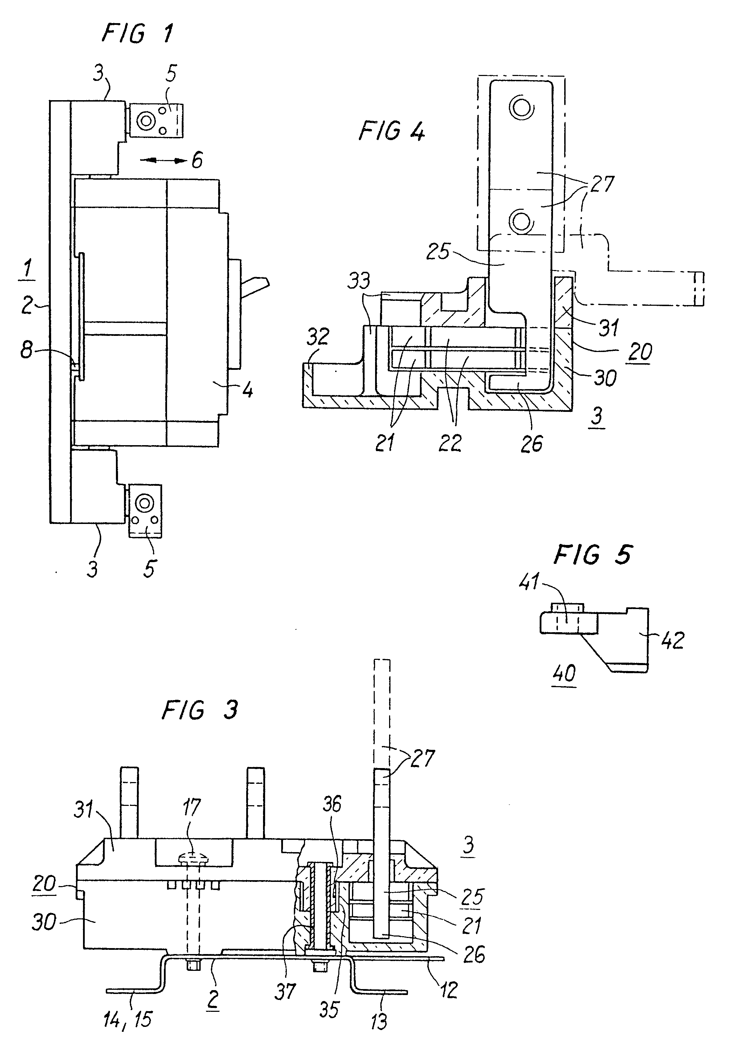

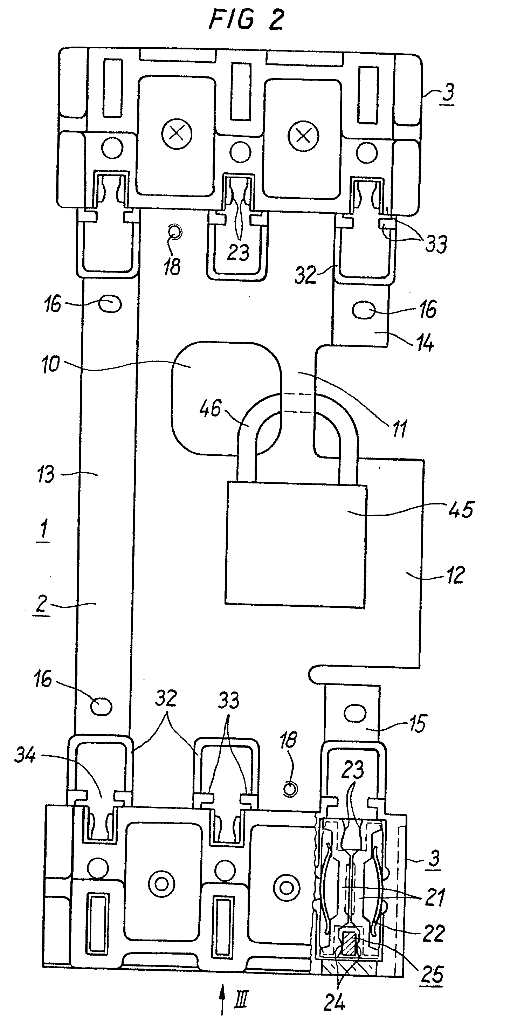

Die Fig. 1 zeigt schematisch einen Stecksockel mit einem aufgesetzten Niederspannungs-Schutzschalter in einer Seitenansicht.

Ein Stecksockel ist in den Fig. 2 und 3 in der Draufsicht und in einer Stirnansicht dargestellt. Beide Figuren weisen zur Sichtbarmachung von Kontaktlamellen Teilschnitte auf.

Weitere Einzelheiten der Steckeinheiten des Stecksockels sind der Fig. 4 zu entnehmen, die den Stecksockel im Bereich der Kontaktlamellen im Querschnitt zeigt.

In der Fig. 5 ist ein Messerkontaktstück gezeigt.

Die in der Fig. 1 schematisch gezeigte Anordnung umfaßt einen als Ganzes mit 1 bezeichneten Stecksockel, der aus einer Tragplatte 2 und zwei darauf befestigten Steckeinheiten 3 besteht. Mit den Kontaktelementen dieser Steckeinheiten besteht ein Niederspannungs-Schutzschalter 4 in Kompaktbauart mit Isolierstoffgehäuse in Verbindung. Der Niederspannungs-Schutzschalter 4 ist nur in seinen Umrissen gezeigt und kann z. B. den in der DE-B-2 757 696 beschriebenen Aufbau besitzen. Die Steckeinheiten 3 sind mit Anschlußvorrichtungen 5 für Stromschienen versehen.

Von dem Stecksockel 1 läßt sich der Schutzschalter in Richtung des Pfeiles 6 abheben. Hierzu ist lediglich die Lösung eines Sicherungselementes, z. B. einer Schraube, erforderlich, die den Schutzschalter am Verlassen der dargestellten Betriebsstellung hindert.

Einzelheiten des Stecksockels 1 sind den Fig. 1, 2 und 3 zu entnehmen. Die Tragplatte 2 des Stecksockels 1 ist in Längsrichtung nach der Art der bekannten Hutprofilschienen geformt und kann zweckmäßig aus Stahlblech hergestellt sein. Während die linke Seite der Tragplatte 2 in Fig. 2 durchgehend abgekantet ist, weist die rechte Seite eine Unterbrechung auf. Hier befinden sich eine Durchbrechung 10 mit einem am Rand verbleibenden Steg 11, dessen Zweck noch erläutert wird. Anschließend an den Steg 11 besitzt die Tragplatte 2 einen seitlichen Fortsatz 12, dessen Bedeutung ebenfalls noch erläutert wird. Die zur Auflage auf einem Gerüst oder Gestell bestimmten Schenkel 13 sowie 14 und 15 sind mit Löchern 16 zur Befestigung versehen. Die bisher genannten Merkmale der Tragplatte 2, d. h. die Durchbrechung 10 mit dem Steg 11 sowie der Fortsatz 12 und die Löcher 16, befinden sich in dem Bereich, der zwischen den beiden Steckeinheiten 3 liegt. Die Steckeinheiten sind vollkommen gleich und sind mittels Schrauben 17 oder anderer geeigneter Befestigungsmittel in spiegelbildlicher Stellung nahe den Enden der Tragplatte 2 befestigt. Wie die Fig. 2 zeigt, sind in dem zwischen den Steckeinheiten 3 liegenden Bereich der Tragplatte 2 ferner zwei Gewindelöcher 18 zur Befestigung eines Schutzschalters (Fig. 1) angebracht.

Der Aufbau der Steckeinheiten 3 wird im folgenden anhand der Fig. 2, 3 und 4 erläutert. Entsprechend der üblichen Polzahl der Schutzschalter ist die Steckeinheit dreipolig ausgeführt. Sie besitzt dementsprechend drei nebeneinander in einem Isolierstoffgehäuse 20 angeordnete Sätze von Kontaktelementen, von denen einer durch eine aufgebrochene Darstellung sichtbar gemacht ist. Als Kontaktelemente dienen brückenartige Kontaktlamellen 21, die paarweise einander gegenüberstehend angeordnet sind und unter der Wirkung von Blattfedern 22 stehen. Die Kontaktlamellen besitzen an beiden gegenüberliegenden Enden Kontaktflächen. Dabei sind Kontaktflächen 23 an der dem einzusetzenden Schutzschalter zugewandten Seite vorgesehen und wirken mit Leiterstücken zusammen, die in die Anschlußvorrichtungen des Schutzschalters eingesetzt werden. Weitere an den gegenüberliegenden Enden befindliche Kontaktflächen 24 stehen ständig mit einem Leiterstück 25 in Verbindung, das entsprechend der Fig. 3 zwei Paare von Kontaktlamellen 21 mit einem Fortsatz 26 hakenartig untergreift und dessen äußeres Ende 27 entsprechend der jeweils gewünschten Anschlußart gestaltet sein kann.

Zur Aufnahme der Kontaktlamellen 21 besitzen die Gehäuse 20 der Steckeinheiten 3 passende Ausnehmungen, die durch ein Gehäuseunterteil 30 und ein Gehäuseoberteil 31 gebildet werden. Das Gehäuseunterteil 30 ist mit wannenartig ausgebildeten Vorsprüngen 32 im Bereich jedes Satzes von Kontaktlamellen versehen, die gegenüber den Kontaktflächen 23 vorspringend ausgebildet sind und die beim Aufsetzen eines Schutzschalters in entsprechende Ausnehmungen an der Unterseite des Schaltergehäuses eingreifen. Die Vorsprünge 32 vergrößern den Kriechweg gegenüber der Tragplatte 2 (Fig. 1 und 2) derart, daß die übliche Bauhöhe der Schutzschalteranordnung beibehalten werden kann. Ferner sind durch Stege 33 des Gehäuseunterteiles 30 und des Gehäuseoberteiles 31 Mündungen 34 gebildet, die Berührungssicherheit bei entferntem Schutzschalter gewährleisten.

Die in der Fig. 3 dargestellte teilweise geschnittene Stirnansicht der Steckeinheit 3 läßt noch erkennen, daß das Gehäuseunterteil 30 und das Gehäuseoberteil 31 mit einer Vertiefung 35 und Zapfen 36 formschlüssig ineinandergreifen und an diesen Stellen z. B. durch einen Hohlniet 37 verbunden sind. Durch das Zusammenfügen der beiden Gehäuseteile werden die Ausnehmungen verschlossen, in denen die im Ausführungsbeispiel jeweils vorgesehenen zwei Paare von Kontaktlamellen 21 mit ihren Blattfedern 22 aufgenommen sind. Wie man erkennt, verlaufen die Kontaktlamellen parallel zu den Strombahnen des anzuschließenden Schutzschalters und gelangen beim Einstecken eines Schutzschalters nacheinander in Eingriff mit den Messerkontaktstücken des Schutzschalters. Damit werden die mechanischen und elektrischen Eigenschaften erreicht, wie sie in der DE-C-1 665 986 beschrieben sind.

Der beschriebene Stecksockel 1 kann in einem Schaltschrank oder auf einer Schalttafel in der benötigten Anzahl, d. h. einzeln oder mehrfach nebeneinander, angeordnet sein. Die Schutzschalter der dem Stecksockel entsprechenden Größe werden vor dem Einsetzen mit Messerkontaktstücken versehen, die z. B. die in der Fig. 5 gezeigte Gestalt aufweisen können. Die Messerkontaktstücke 40 sind zum Einsetzen in die an Schutzschaltern der Konpaktbauart häufig vorhandenen Rahmenklemmen oder an deren Stelle vorgesehen und besitzen dementsprechend ein zylindrisches Loch 41. Der gegenüber der Längsachse dieses Loches 41 rechtwinklig verlaufende Messerteil 42 ist zum Eingreifen zwischen die Kontaktlamellen 21 vorgesehen. Die Kontaktmesser 42 gelangen nacheinander mit dem oberen und dann mit dem unteren Paar von Kontaktlamellen 21, d. h. in Richtung des Pfeiles 6 in Fig. 1, in Eingriff. Die hierzu benötigte Kraft ist dadurch wesentlich verringert. Die Vorsprünge 32 an den Gehäuseunterteilen 30 der Steckeinheiten 3 greifen dabei in passende Ausnehmungen ein, die an der Unterseite des Gehäuses des Schutzschalters vorgesehen sind. Sofern der Schutzschalter mit einem Sicherheitsauslösestift versehen ist, wie er in der Fig. 1 mit 8 bezeichnet ist, wird dieser beim Aufsetzen des Schutzschalters eingedrückt und durch das Anziehen von Befestigungsschrauben (Gewindelöcher 18 in Fig. 2) in der eingedrückten Stellung gehalten. Der Schalter läßt sich dann in üblicher Weise ein- und ausschalten oder er kann selbsttätig auslösen. Wird dagegen der Schutzschalter im eingeschalteten Zustand von dem Stecksokkel 1 abgenommen, so bewirkt der Sicherheitsauslösestift eine Auslösung und damit eine Unterbrechung des Stromkreises, bevor die Messerkontaktstücke 40 die Kontaktlamellen 21 verlassen. Damit ist eine für den Bedienenden gefährliche Lichtbogenbildung an den Steckeinheiten 3 verhindert.

Zur Erhaltung einer sichtbaren Trennstrecke kann bei Reparaturarbeiten im spannungsfreien Zustand ein Vorhängeschloß eingehängt werden. In der Fig. 2 ist hierzu ein Vorhängeschloß 45 gezeigt, dessen Bügel 46 um den Steg 11 der Tragplatte 2 herumgelegt ist. Ferner ist zu erkennen, daß der Steg 11 gegenüber dem Rand der Tragplatte 2 so weit zurückgesetzt ist, daß ein Vorhängeschloß üblicher Abmessungen innerhalb der Kontur der aus Stecksockel und Schutzschalter bestehenden Anordnung Platz findet. Es können daher mehrere Stecksockel 1 nebeneinander montiert werden, ohne die Anwendbarkeit der Vorhängeschlösser zu behindern. Der Bügel 46 des Vorhängeschlosses 45 verhindert, daß ein Schutzschalter mit seinen Messerkontakten in Eingriff mit beiden gegenüberliegenden Steckeinheiten 3 gelangen kann. Die Spannungsfreiheit an der Arbeits- oder Baustelle ist damit gewährleistet.

**Patentansprüche**

1. Stecksockel (1) für Niederspannungs-Schutzschalter (4) in Kompaktbauform mit an gegenüberliegenden Stirnseiten angeordneten Anschlußvorrichtungen (5), gekennzeichnet durch eine Tragplatte (2) und zwei darauf an ihren Enden angeordnete gleiche Steckeinheiten (3), die parallel zur Strombahn des Schutzschalters (4) verlaufende brückenartige Kontaktlamellen (21) zur Verbindung mit an dem Schutzschalter (4) befindlichen äußeren Messerkontaktstücken (40) aufweisen.

2. Stecksockel nach Anspruch 1, dadurch gekennzeichnet, daß die Tragplatte (2) in ihrem zwischen den Steckeinheiten (3) liegenden Teil eine Durchbrechung (10) mit einem am Rand verbleibenden frei zugänglichen Steg (11) für den Schloßbügel (46) wenigstens eines Vorhängeschlosses (45) besitzt.

3. Stecksockel nach Anspruch 1, dadurch gekennzeichnet, daß die Tragplatte (2) in ihren zwischen den Steckeinheiten (3) liegenden Teil einen seitlichen Fortsatz (12) als Gegenfläche für einen am Unterteil des Schutzschalters (4) angeordneten Sicherheitsauslösestift (8) besitzt.

4. Stecksockel nach den Ansprüchen 2 und 3, dadurch gekennzeichnet, daß die Tragplatte (2) an den Längsseiten mit Ausnahme des Steges (11) und des Fortsatzes (12) hutschienenartig profiliert ist.

5. Stecksockel nach Anspruch 1, gekennzeichnet durch an den Steckeinheiten (3) schalterseitig vorgesehene Stege (33), die eine Mündung (34) für die Messerkontaktstücke (40) des Schutzschalters (4) begrenzen, der gegenüber die Kontaktlamellen (21) mit einem Sicherheitsabstand zurückgesetzt sind.

6. Stecksockel nach Anspruch 5, dadurch gekennzeichnet, daß das Gehäuse (20) der Steckeinheit (3) im Bereich der Stege (33) in Richtung auf den einzusteckenden Schutzschalter (4) durch einen Vorsprung (32) verlängert ist und das Gehäuse des Schutzschalters (4) eine Ausnehmung zur Aufnahme des Vorsprungs (32) besitzt.

7. Stecksockel nach Anspruch 1, dadurch gekennzeichnet, daß äußere Anschlußstücke (27) in dem Gehäuse (20) der Steckeinheiten (3) durch Herumgreifen um die Kontaktlamellen (21) formschlüssig gehalten und auswechselbar sind.

**Claims**

1. A plug-in base (1) for low-voltage protective circuit breakers (4) of compact construction having connection devices (5) arranged at opposite end faces, characterised by a supporting plate (2) and two identical plug-in units (3) which are arranged thereon at its ends and which have bridge-like contact plates (21), which extend parallel to the current path of the protective circuit breaker (4), for connection with external knife-blade contact members (40) provided on the protective circuit breaker (4).

2. A plug-in base as claimed in Claim 1, characterised in that in its part which lies between the plug-in units (3), the supporting plate (2) has an opening (10) with a freely accessible cross-piece (11) remaining at the edge for the shackle (46) of at least one padlock (45).

3. A plug-in base as claimed in Claim 1, characterised in that in its part which lies between the plug-in units (3), the supporting plate (2) has a lateral extension (12) serving as a countersurface for a safety release pin (8) arranged at the base of the protective circuit breaker (4).

4. A plug-in base as claimed in Claims 2 and 3, characterised in that the supporting plate (2) is profiled at the longitudinal sides with the exception of the cross-piece (11) and the extension (12), in hat-rail-like manner.

5. A plug-in base as claimed in Claim 1, characterised by cross-pieces (33) which are arranged on the plug-in units (3) at the switch side and which delimit an aperture (34) for the knife-blade contact pieces (40) of the protective circuit breaker (4), which are set back at a safe distance in relation to the contact plates (21).

6. A plug-in unit as claimed in Claim 5, characterised in that in te region of the cross-pieces (33), in the direction of the protective circuit breaker (4) which is to be plugged-in, the housing (20) of the plug-in unit (3) is extended by a projection (32) and the housing of the protective circuit breaker (4) has a recess to receive the projection (32).

7. A plug-in base as claimed in Claim 1, characterised in that in the housing (20) of the plug-in units (3), external connection pieces (27) are held in form-locked manner by gripping around by the contact plates (21) and are exchangeable.

**Revendications**

1. Socle à enfichage (1) pour des interrupteurs de sécurité basse tension (4) de forme de construction compacte avec des dispositifs de branchement (5) prévus sur des côtés frontaux opposés, caractérisé par une plaque de support (2) et deux unités à enfichage identiques (3) disposées à ses extrémités et présentant des lamelles de contact (21) qui s'étendent parallèlement à la voie de passage du courant de l'interrupteur de sécurité (4), pour la liaison avec des pièces de contact extérieures et à couteaux (40) qui se trouvent sur l'interrupteur de sécurité (4).

2. Socle à enfichage selon la revendication 1, caractérisé par le fait que la plaque de support (2) possède, dans sa partie se situant entre les unités à enfichage (3), une ouverture (10) avec une barrette qui subsiste sur le bord et qui est librement accessible pour l'étrier (46) d'un cadenas (45).

3. Socle à enfichage selon la revendication 1, caractérisé par le fait que la plaque de support (2), possède dans sa partie qui se situe entre les unités à enfichage (3), un appendice (12) servant de contre appui pour une cheville de déclenchement de sécurité (8) disposée sur la partie inférieure de l'interrupteur de sécurité (4).

4. Socle à enfichage selon les revendications 2 et 3, caractérisé par le fait que la plaque de support (2) est en profilé-chapeau sur les côtés longitudinaux, à l'exception de la barrette (11) et de l'appendice (12).

5. Socle à enfichage selon la revendication 1, caractérisé par des barrettes (33) qui sont prévues sur les unités à enfichage (3), du côtés de l'interrupteur, et qui délimitent une entrée (34) pour les pièces de contact à couteaux (40) de l'interrupteur de sécurité (4), par rapport à laquelle les lamelles de contact (21) sont en retrait d'une distance de sécurité.

6. Socle à enfichage selon la revendication 5, caractérisé par le fait que le boîtier (20) de l'unité à enfichage (3) est prolongé dans la région des barrettes (33) et en direction de l'interrupteur de sécurité (4) à enficher, par une partie saillante (32), et le boîtier de l'interrupteur de sécurité (4) possède une ouverture pour recevoir la partie saillante (32).

7. Socle à enfichage selon la revendication 1, caractérisé par le fait que les pièces extérieures de branchement (27) sont maintenues, à transmission de forces, dans le bîtier (20) des unités à enfichage (3), en entourant les lamelles de contact (21), et sont remplaçables.

FIG 1

FIG 4

FIG 5

FIG 3

# FIG 2